# EUROPÄISCHE PATENTANMELDUNG

(11) **EP 4 119 591 A1**
(43) Veröffentlichungstag der Anmeldung: **18.01.2023**
(21) Anmeldenummer: 21185056.5
(22) Anmeldetag: 12.07.2021
(51) Int. Cl.: C08G 59/50

(54) **HÄRTER FÜR EPOXIDHARZE**

(71) Anmelder: Sika Technology AG, 6340 Baar (CH)
(72) Erfinder: Kasemi, Edis, 8046 Zürich (CH); Burckhardt, Urs, 8049 Zürich (CH); Kramer, Andreas, 8008 Zürich (CH); Stadelmann, Ursula, 8046 Zürich (CH)
(74) Vertreter: Sika Patent Attorneys

(57) **Zusammenfassung**

Gegenstand der Erfindung ist die Verwendung eines Amins der Formel (I) zum Aushärten von Epoxidharzen, wobei mit besonders geringer Exothermie Kunstharzprodukte mit überraschend hoher Glasübergangstemperatur entstehen. Das Amin der Formel (I) ermöglicht insbesondere Epoxidharz-Formkörper, -Vergussmassen und -Composites, welche einfach und fehlerfrei herstellbar sind, schöne Oberflächen aufweisen und hohe Gebrauchstemperaturen ermöglichen.

## Beschreibung

### Technisches Gebiet

Die Erfindung betrifft Amine und deren Verwendung als Härter für Epoxidharze, sowie Epoxidharz-Zusammensetzungen und Anwendungen davon, insbesondere als Formkörper oder Matrixharz für Verbundwerkstoffe.

### Stand der Technik

Als Härter für Epoxidharze werden zumeist primäre Diamine eingesetzt. Die Auswahl an preisgünstigen, kommerziell erhältlichen primären Diaminen ist aber sehr limitiert. In der Praxis besonders häufig eingesetzt werden 1,3-Bis(aminomethyl)-benzol (meta-Xylylendiamin oder MXDA) und 1-Amino-3-aminomethyl-3,5,5-trimethylcyclohexan (Isophorondiamin oder IPDA). Beide Amine zeichnen sich durch eine niedrige Viskosität und eine gute Verdünnungswirkung auf Epoxidharze aus und vernetzen diese zu mechanisch hochwertigen, chemikalienbeständigen Polymeren. Es gibt für diese Amine aber nur wenige Hersteller, da der Herstellprozess anspruchsvoll ist und hohe Investitionen in Anlagen und Sicherheitsmassnahmen erfordert. Dies führt immer wieder zu Angebotsverknappungen und Preisschwankungen. Zudem haben beide Amine auch technische Nachteile. MXDA ist sehr reaktiv und die bei der Aushärtung mit dem Epoxidharz freigesetzte Exothermie ist sehr hoch, was bei dickschichtigen Anwendungen durch den hohen Hitzeeintrag zu Blasen, Verfärbungen oder anderen Inhomogenitäten führen kann. Ausserdem werden mit MXDA nur moderate Glasübergangstemperaturen erreicht, was insbesondere bei Klebstoffen und Matrixharzen für Verbundwerkstoffe (Composites) ein Nachteil ist. IPDA ist MXDA in Bezug auf Hitzeentwicklung bei der Aushärtung und Glasübergangstemperatur überlegen. Eine noch geringere Hitzeentwicklung bei der Aushärtung und eine breitere Auswahl an verfügbaren primären Diaminen mit vorteilhaften Eigenschaften in Bezug auf Aushärtung und Glasübergangstemperatur wäre aber wünschenswert.

Aus US 2014/107313 und US 2015/344406 ist die Verwendung von N,N'-dialkyliertem MXDA und aus EP 3,344,677 die Verwendung von N-benzyliertem 1,2-Ethandiamin als Härter für Epoxidharze bekannt. Bei diesen Aminen geht durch die sekundären Aminogruppen ein Teil der Funktionalität verloren, was nach der Aushärtung zu niedrigen Glasübergangstemperaturen führt.

Aus US 2017/226278 und EP 3,344,678 sind Polyamine aus der reduktiven Alkylierung von Dialdehyden wie Terephthaldehyd mit 1,2-Propandiamin oder 1,2-Ethandiamin bekannt, welche zwei primäre und zwei sekundäre Aminogruppen enthalten. Sie sind vergleichsweise hochviskos, verdünnen Epoxidharze weit weniger gut als MXDA oder IPDA und ermöglichen ebenfalls keine hohen Glasübergangstemperaturen.

Aus WO 2019/230692 sind an den α-Positionen zu den Amingruppen ethylierte Xylylendiamine mit drei oder vier Ethylgruppen bekannt. Aufgrund der hohen sterischen Hinderung zeigen diese Amine eine stark reduzierte Reaktivität gegenüber Epoxidharzen, was zu einer sehr langsamen Aushärtung führt. Ausserdem sind sie hochviskos und sehr aufwendig in der Herstellung, und die damit ausgehärteten Polymere sind aufgrund des tertiären Kohlenstoffatoms im Härter wenig beständig gegenüber Wärme und UV-Licht.

### Darstellung der Erfindung

Aufgabe der vorliegenden Erfindung ist es daher, ein primäres Diamin zum Aushärten von Epoxidharzen zur Verfügung zu stellen, welches einfach herstellbar ist und eine zuverlässige Aushärtung bei geringer Exothermie sowie eine hohe Glasübergangstemperatur ermöglicht.

Überraschenderweise löst ein Amin der Formel (I) wie in Anspruch 1 beschrieben diese Aufgabe. Das Amin der Formel (I) ist aus gut erhältlichen Ausgangsstoffen in einem einfachen Prozess herstellbar. Es ist niedrigviskos und vermag Epoxidharze gut zu verdünnen. Es zeigt mit Epoxidharzen eine lange Topfzeit und eine störungsfreie Aushärtung mit überraschend geringer Exothermie. Dies ermöglicht die Verwendung in dickschichtigen Epoxidharz-Produkten wie Formkörpern, Vergussmassen oder Matrixharzen für Composites, ohne dass aufgrund hoher Hitzeentwicklung Blasen, Verfärbungen oder sonstige Inhomogenitäten auftreten. Überraschenderweise werden mit dem Amin der Formel (I) sehr hohe Glasübergangstemperaturen erreicht, insbesondere mit den in 1,4-Stellung stehenden Aminen und den Aminen mit R = Methyl. Ausserdem ist das Amin der Formel (I) überraschend geruchsarm, was einen Vorteil bei der Handhabung und Applikation darstellt und von Verarbeitern sehr geschätzt wird, und es ermöglicht ausgehärteten Epoxidharz-Zusammensetzungen mit besonders wenig Vergilbung, was insbesondere im Fall von A = Phenylen besonders überraschend ist.

Das Amin der Formel (I) ermöglicht insbesondere Epoxidharz-Formkörper, -Vergussmassen und -Composites, welche einfach und fehlerfrei herstellbar sind, schöne Oberflächen aufweisen und hohe Gebrauchstemperaturen ermöglichen. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist die Verwendung eines Amins der Formel (I) zum Aushärten von Epoxidharzen, 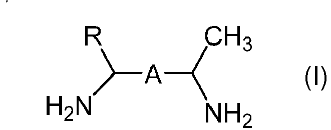 wobei
R für H oder Methyl steht, und
A für einen Phenylen- oder Cyclohexylen-Rest steht.

Mit "Poly" beginnende Substanznamen wie Polyamin oder Polyepoxid bezeichnen Substanzen, die formal zwei oder mehr der in ihrem Namen vorkommenden funktionellen Gruppen pro Molekül enthalten.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Amingruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet. Es wird angegeben in der Masseinheit "g/eq".

Als "Epoxid-Equivalentgewicht" wird die Masse einer Epoxidgruppen-haltigen Verbindung oder Zusammensetzung bezeichnet, die ein Mol-Equivalent Epoxidgruppen enthält. Es wird angegeben in der Masseinheit "g/eq".

Als "Verdünner" wird eine in einem Epoxidharz lösliche und dessen Viskosität senkende Substanz bezeichnet, welche bei der Aushärtung chemisch nicht in das Epoxidharz-Polymer eingebunden wird.

Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.

Als "Topfzeit" wird die maximale Zeitspanne ab dem Mischen der Komponenten und der Applikation einer Epoxidharz-Zusammensetzung bezeichnet, in der die vermischte Zusammensetzung in einem ausreichend fliessfähigen Zustand ist und die Substratoberflächen gut benetzen kann.

Als "Gelierzeit" wird die Zeitspanne ab dem Mischen der Komponenten einer Epoxidharz-Zusammensetzung bis zu deren Gelieren bezeichnet.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen, sofern nicht anders angegeben.

Gewichtsprozente (Gewichts-%) bezeichnen Massenanteile eines Bestandteils einer Zusammensetzung bezogen auf die gesamte Zusammensetzung, falls nichts anderes angegeben ist. Die Begriffe "Masse" und "Gewicht" werden im vorliegenden Dokument synonym benutzt.

Bevorzugt ist A ausgewählt aus der Gruppe bestehend aus 1,3-Phenylen, 1,4-Phenylen, 1,3-Cyclohexylen und 1,4-Cyclohexylen.

Besonders bevorzugt steht A für 1,3-Phenylen oder 1,4-Phenylen. Ein solches Amin der Formel (I) ist besonders verträglich mit aromatischen Epoxidharzen und ermöglicht besonders schöne Oberflächen nach der Aushärtung.

Insbesondere steht A für 1,4-Phenylen. Ein solches Amin der Formel (I) ermöglicht eine besonders hohe Glasübergangstemperatur.

Bevorzugt ist das Amin der Formel (I) ausgewählt aus der Gruppe bestehend aus 1,4-Bis(α-aminoethyl)benzol, 1,3-Bis(α-aminoethyl)benzol, 1-α-Aminoethyl-4-aminomethyl-benzol und 1-α-Aminoethyl-3-aminomethyl-benzol.

Besonders bevorzugt ist 1,4-Bis(α-aminoethyl)benzol oder 1,3-Bis(α-aminoethyl)-benzol. Diese Amine der Formel (I) ermöglichen eine besonders hohe Glasübergangstemperatur.

Am meisten bevorzugt ist 1,4-Bis(α-aminoethyl)benzol. Es ermöglicht die höchsten Glasübergangstemperaturen und besonders wenig Vergilbung.

1-α-Aminoethyl-4-aminomethyl-benzol und 1-α-Aminoethyl-3-aminomethyl-benzol ermöglichen eine besonders schnelle Aushärtung.

Das Amin der Formel (I) ist bevorzugt Bestandteil eines Reaktionsprodukts erhalten aus der Umsetzung von
- mindestens einem Keton der Formel (II) mit
- Ammoniak oder Hydroxylamin oder einem Oxim der Formel (III)
und nachfolgender Hydrierung, 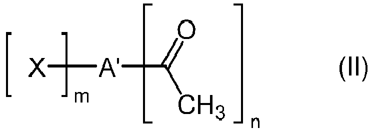 wobei 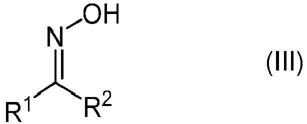
m für 0 oder 1, n für 1 oder 2 und (m+n) für 2 stehen,
X für Formyl oder Nitril steht,
A' für einen Phenylen- oder Cyclohexylen-Rest steht, und
R¹ für H oder Methyl und R² für H oder einen Alkylrest mit 1 bis 4 C-Atomen stehen.

Bevorzugt steht A' für einen Phenylen-Rest, insbesondere für 1,3-Phenylen oder 1,4-Phenylen.

Bevorzugt steht R¹ für Methyl.

Bevorzugt steht R² für einen Alkylrest mit 1 bis 4 C-Atomen, insbesondere für Methyl oder Ethyl oder Isobutyl.

Bevorzugt als Keton der Formel (II) ist 1,3-Diacetylbenzol, 1,4-Diacetylbenzol, 4-Acetylbenzonitril, 3-Acetylbenzonitril, 4-Formylbenzonitril oder 3-Formylbenzonitril. Besonders bevorzugt ist 1,3-Diacetylbenzol oder 1,4-Diacetylbenzol.

Für die Umsetzung wird das Keton der Formel (II) bevorzugt in einem organischen Lösemittel gelöst. Bevorzugte organische Lösemittel sind Alkohole, insbesondere Methanol, Ethanol oder Isopropanol.

Bevorzugt wird Ammoniak oder Hydroxylamin oder ein Oxim der Formel (III) ungefähr stöchiometrisch oder im stöchiometrischen Überschuss gegenüber den Carbonylgruppen des Ketons der Formel (II) eingesetzt.

Für Ketone der Formel (II), welche frei von Nitrilgruppen sind, wird für die Umsetzung bevorzugt Ammoniak oder Hydroxylamin eingesetzt. Dabei verläuft die Umsetzung unter Freisetzung von Wasser. Gegebenenfalls wird die Umsetzung in Anwesenheit eines Katalysators durchgeführt, beispielsweise einer schwachen Base wie Kaliumcarbonat.

Für Ketone der Formel (II), welche eine Nitrilgruppe enthalten, wird für die Umsetzung bevorzugt ein Oxim der Formel (III) eingesetzt.

Bevorzugt als Oxim der Formel (III) ist Acetaldehydoxim, Acetonoxim, Methylethylketoxim, Methylisopropylketoxim oder Methylisobutylketoxim, insbesondere Acetonoxim, Methylethylketoxim oder Methylisobutylketoxim.

Mit einem Oxim der Formel (III) erfolgt die Umsetzung in einer Transoximation unter Freisetzung des Aldehyds oder Ketons der Formel 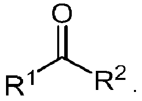 Bevorzugt erfolgt sie in Anwesenheit einer starken Säure, insbesondere Perchlorsäure.

Die Umsetzung verläuft über ein Zwischenprodukt der Formel (IVa), (IVb), (IVc) oder (IVd), 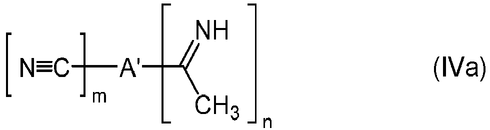 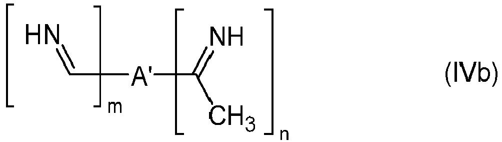 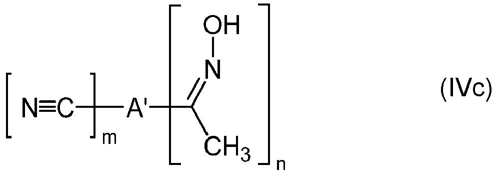 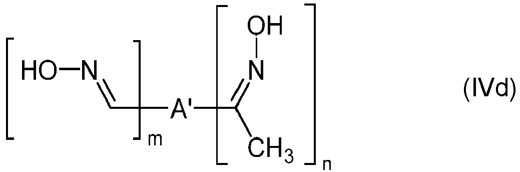 wobei A', m und n die bereits genannten Bedeutungen aufweisen.

Vor der Hydrierung kann das Zwischenprodukt isoliert und gegebenenfalls aufgereinigt werden, insbesondere durch Entfernen der flüchtigen Anteile mittels Destillation oder Stripping, gegebenenfalls gefolgt von Waschen mit Wasser oder wässrigen Salzlösungen, um beispielsweise Kaliumcarbonat oder Perchlorsäure zu entfernen, oder die Umsetzung und Hydrierung erfolgt in einem Eintopfverfahren ohne Isolierung des Zwischenprodukts.

Die Hydrierung kann direkt mit molekularem Wasserstoff oder indirekt durch Wasserstoff- oder Hydrid-Transfer von anderen Reagenzien, wie beispielsweise Ameisensäure oder LiAlH₄, erfolgen. Bevorzugt erfolgt die Hydrierung mit molekularem Wasserstoff.

Bevorzugt wird die Hydrierung in Anwesenheit eines geeigneten Katalysators durchgeführt. Als Katalysator bevorzugt sind Palladium auf Kohle (Pd/C), Platin auf Kohle (Pt/C), Adams-Katalysator oder Raney-Nickel, insbesondere Palladium auf Kohle oder Raney-Nickel.

Bei Verwendung von molekularem Wasserstoff wird die Hydrierung bevorzugt in einer Druckapparatur bei einem Wasserstoff-Druck von 5 bis 300 bar gearbeitet. Dies kann in einem Batch-Prozess oder bevorzugt in einem kontinuierlichen Prozess erfolgen.

Die Hydrierung wird bevorzugt bei einer Temperatur im Bereich von 40 bis 150 °C durchgeführt. Für den Fall, dass A' für Phenylen steht, können die Hydrierbedingungen so gewählt werden, dass der Phenylen-Rest dabei nicht hydriert oder ebenfalls hydriert wird. Soll ein vorhandener Phenylen-Rest bei der Hydrierung nicht hydriert werden, wird bevorzugt bei einer Temperatur im Bereich von 60 bis 120 °C und einem Wasserstoffdruck im Bereich von 10 bis 120 bar gearbeitet. Andernfalls wird bevorzugt bei einer Temperatur im Bereich von 80 bis 150 °C und einem Wasserstoffdruck im Bereich von 150 bis 250 bar gearbeitet.

Bevorzugt werden die flüchtigen Anteile, insbesondere ein gegebenenfalls vorhandenes Lösemittel und gegebenenfalls Wasser, nach der Hydrierung aus dem Reaktionsprodukt entfernt, insbesondere mittels Destillation oder Stripping.

Das Reaktionsprodukt kann weiter gereinigt werden, insbesondere durch Destillation. Dadurch wird ein Reaktionsprodukt mit einem besonders hohen Gehalt an Amin der Formel (I) erhalten.

Ein weiterer Gegenstand der Erfindung ist ein Reaktionsprodukt enthaltend mindestens ein Amin der Formel (I), erhalten aus der Umsetzung von
- mindestens einem Keton der Formel (II) mit
- Ammoniak oder Hydroxylamin oder einem Oxim der Formel (III)
und nachfolgender Hydrierung, wie vorgängig beschrieben.

Bevorzugt ist das Keton der Formel (II) 1,3-Diacetylbenzol oder 1,4-Diacetylbenzol. Dabei steht in Formel (II) m für 0 und n für 2.

Bevorzugt enthält das Reaktionsprodukt einen Gehalt an Amin der Formel (I) von mindestens 50 Gewichts-%, besonders bevorzugt mindestens 80 Gewichts-%, insbesondere mindestens 90 Gewichts-%, bezogen auf das Reaktionsprodukt.

Das Amin der Formel (I) kann als Mischung aus einem Amin der Formel (I), bei welchem A für einen Phenylen-Rest steht, und Amin der Formel (I), bei welchem A für einen Cyclohexylen-Rest steht, vorhanden sein, insbesondere resultierend von einer teilweisen Hydrierung eines Phenylen-Rests aus dem Keton der Formel (II).

Für den Falls, dass als Keton der Formel (II) eine technische Qualität von 1,3-Diacetylbenzol enthaltend Anteile von 1,3,5-Triacetylbenzol eingesetzt wurde, enthält das Reaktionsprodukt insbesondere 1,3,5-Tris(α-aminoethyl)benzol als Nebenprodukt.

Das Amin der Formel (I), insbesondere in Form des beschriebenen Reaktionsprodukts, wird verwendet zum Aushärten von Epoxidharzen.

Geeignete Epoxidharze sind insbesondere Glycidylether von handelsüblichen ein- oder mehrfunktionellen Alkoholen oder Phenolen, insbesondere die in diesem Dokument genannten Epoxidharze.

Bevorzugt werden das Amin der Formel (I), das Epoxidharz und gegebenenfalls weitere Substanzen miteinander vermischt, wobei das Verhältnis der gegenüber den Epoxidgruppen reaktiven Gruppen, insbesondere den Aminwasserstoffen des Amins der Formel (I), und den Epoxidgruppen bevorzugt im Bereich von 0.5 bis 1.5, insbesondere 0.7 bis 1.2, liegt.

Die Aushärtung kann bei Umgebungstemperatur, insbesondere im Bereich von 5 bis 40 °C erfolgen, oder sie kann bei erhöhter Temperatur erfolgen. Bevorzugt erfolgt sie bei erhöhter Temperatur, insbesondere im Bereich von 40 bis 150 °C, bevorzugt 50 bis 120 °C.

Für eine Aushärtung bei erhöhter der Temperatur können das Amin der Formel (I) und/oder das Epoxidharz vor dem Vermischen einzeln erwärmt werden, und/oder die vermischte Zusammensetzung wird als solche erwärmt.

Bei einer Aushärtung bei erhöhter Temperatur wird die Viskosität der vermischten Zusammensetzung gesenkt und die Aushärtung erfolgt besonders schnell. Dabei ist aber auch die freigesetzte Exothermie besonders kritisch, da diese sehr schnell zu einem starken Aufheizen der aushärtenden Zusammensetzung führen und Blasen, Verfärbungen oder sonstigen Inhomogenitäten verursachen kann.

Mit dem Amin der Formel (I) entsteht eine besonders niedrige Exothermie bei zuverlässiger, schneller Aushärtung. Zudem verfügt das ausgehärtete Material über eine sehr hohe Glasübergangstemperatur, was hohe Gebrauchstemperaturen ermöglicht.

Ein weiterer Gegenstand der Erfindung ist ein aminfunktionelles Addukt aus der Umsetzung des Amins der Formel (I) und mindestens einem Epoxidharz oder Monoepoxid.

Das Epoxidharz oder Monoepoxid hat bevorzugt ein mittleres Epoxid-Equivalentgewicht im Bereich von 150 bis 500 g/eq, bevorzugt 156 bis 250 g/eq.

Besonders bevorzugt sind aromatische Epoxidharze, insbesondere aromatische Diepoxide wie insbesondere Bisphenol A-, F- oder A/F-Diglycidylether oder Novolak-Epoxidharze, insbesondere Phenol-Formaldehyd Novolak-Glycidylether. Solche Addukte ermöglichen eine besonders schnelle Aushärtung und hohe Glasübergangstemperaturen.

Weiterhin bevorzugt sind Epoxidharze mit Polyoxypropylen- und/oder Polyoxyethylen-Einheiten. Dies sind insbesondere Diglycidylether von Polypropylenglykolen oder Umsetzungsprodukte von Bisphenol A-, F- oder A/F-Diglycidylethern mit Polypropylenglykolen oder Polyethylenglykolen. Solche Addukte sind besonders geeignet als Bestandteil von wasserbasierten Härtern für Epoxidharze.

Weiterhin bevorzugt sind aromatische Monoepoxide, insbesondere Kresylglycidylether, tert.Butylphenylglycidylether oder Cardanolglycidylether.

Bevorzugt sind Addukte aus der Umsetzung des Amins der Formel (I) und mindestens einem Diepoxid in einem stöchiometrischen Verhältnis im Bereich von 1 bis 10, bevorzugt 1.2 bis 5, insbesondere 1.4 bis 3, mol Amin der Formel (I) pro Molequivalent Epoxidgruppen.

Ein weiterer Gegenstand der Erfindung ist ein Härter für Epoxidharze enthaltend mindestens ein Amin der Formel (I) und/oder mindestens ein aminfunktionelles Addukt aus der Umsetzung des Amins der Formel (I) und mindestens einem Epoxidharz oder Monoepoxid, und mindestens einen weiteren Bestandteil ausgewählt aus weiteren Aminen **A1,** Beschleunigern, Verdünnern, Stabilisatoren und oberflächenaktiven Additiven.

Bevorzugt ist das weitere Amin **A1** kein Amin der Formel (I).

Der Härter enthält bevorzugt 2 bis 99 Gewichts-%, bevorzugt 5 bis 90 Gewichts-%, insbesondere 10 bis 80 Gewichts-%, Amin der Formel (I) und/oder aminfunktionelles Addukt aus der Umsetzung des Amins der Formel (I) und mindestens einem Epoxidharz oder Monoepoxid.

Der Härter ist bevorzugt nicht wasserbasiert. Er enthält bevorzugt weniger als 15 Gewichts-%, insbesondere weniger als 10 Gewichts-%, Wasser. Ein solcher Härter ist geeignet für nicht-wässrige Epoxidharz-Produkte.

Geeignete weitere Amine **A1** sind insbesondere Amine mit mindestens zwei, bevorzugt mindestens drei, Aminwasserstoffen, welche nicht der Formel (I) entsprechen.

Bevorzugt als weiteres Amin **A1** sind Polyamine mit mindestens drei aliphatischen Aminwasserstoffen, insbesondere N-Benzyl-1,2-ethandiamin, N-Benzyl-1,2-propandiamin, N-Benzyl-bis(aminomethyl)-1,3-benzol, N-(2-Phenylethyl)-bis(aminomethyl)-1,3-benzol, N-(2-Ethylhexyl)-bis(aminomethyl)-1,3-benzol, 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethyl-1,6-hexandiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, 1,3-Bis(aminomethyl)cyclohexan, 1,4-Bis(aminomethyl)cyclohexan, Bis(4-aminocyclohexyl)methan, Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (IPDA), 2(4)-Methyl-1,3-diaminocyclohexan, 2,5(2,6)-Bis(aminomethyl)-bicyclo[2.2.1]heptan (NBDA), 3(4),8(9)-Bis(aminomethyl)tricyclo[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(aminomethyl)benzol, Bis(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin oder höhere Oligomere dieser Diamine, Bis(3-aminopropyl)polytetrahydrofurane oder andere Polytetrahydrofurandiamine, Polyoxyalkylendi- oder -triamine, insbesondere Polyoxypropylendiamine oder Polyoxypropylentriamine wie insbesondere Jeffamine^{®} D-230, Jeffamine^{®} D-400 oder Jeffamine^{®} T-403 (alle von Huntsman), Polyalkylenamine wie Diethylentriamin (DETA), Triethylentetramin (TETA), Tetraethylenpentamin (TEPA), Pentaethylenhexamin (PEHA), Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin, N,N'-Bis(3-amino-1-ethylpropyl)-2-methyl-1,5-pentandiamin, 3-(2-Aminoethyl)aminopropylamin oder Bis(hexamethylen)triamin (BHMT), N-benzylierte Polyalkylenamine mit einer oder zwei Benzylgruppen, insbesondere benzyliertes DETA, TETA, N3-Amin, N4-Amin oder DPTA, N-Aminoethylpiperazin, 3-(3-(Dimethylamino)propylamino)propylamin (DMAPAPA), aminfunktionelle Addukte der genannten Amine mit Epoxiden, oder Mischungen aus zwei oder mehr dieser Amine.

Bevorzugt enthält der Härter mindestens ein weiteres Amin **A1** ausgewählt aus der Gruppe bestehend aus N-Benzyl-1,2-ethandiamin, MPMD, 1,2-Diaminocyclohexan, 1,3-Bis(aminomethyl)cyclohexan, 1,4-Bis(aminomethyl)cyclohexan, Bis(4-aminocyclohexyl)methan, IPDA, 2(4)-Methyl-1,3-diaminocyclohexan, MXDA, DETA, TETA, TEPA, N3-Amin, N4-Amin, DPTA, BHMT, Polyoxypropylendiaminen mit einem mittlerem Molekulargewicht Mₙ im Bereich von 200 bis 500 g/mol und Polyoxypropylentriaminen mit einem mittlerem Molekulargewicht Mₙ im Bereich von 300 bis 500 g/mol.

Davon bevorzugt ist N-Benzyl-1,2-ethandiamin, MXDA, 1,3-Bis(aminomethyl)-cyclohexan, 1,4-Bis(aminomethyl)cyclohexan oder Bis(4-aminocyclohexyl)methan. Damit wird eine besonders schnelle Aushärtung ermöglicht.

Davon weiterhin bevorzugt ist IPDA. Damit wird ein kostengünstiger Härter mit hoher Glasübergangstemperatur ermöglicht.

Der Härter kann insbesondere auch mehr als ein weiteres Amin **A1** enthalten.

Geeignete Beschleuniger sind insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; Nitrate wie insbesondere Calciumnitrat; tertiäre Amine wie insbesondere 1,4-Diazabicyclo[2.2.2]octan, Benzyldimethylamin, α-Methylbenzyldimethylamin, Triethanolamin, Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]-undec-7-en, Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen.

Bevorzugt sind Säuren, Nitrate, tertiäre Amine oder Mannich-Basen, insbesondere Salicylsäure, Calciumnitrat oder 2,4,6-Tris(dimethylaminomethyl)phenol, oder eine Kombination dieser Beschleuniger.

Geeignete Verdünner sind insbesondere n-Propanol, Isopropanol, n-Butanol, Isobutanol, tert.Butanol, 1-Pentanol, 2-Pentanol, 3-Pentanol, 2-Methyl-1-butanol, 3-Methyl-1-butanol, 3-Methyl-2-butanol n-Hexanol, 2-Ethylhexanol, Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykolmonomethylether, Diethylenglykolmonoethylether, Diethylenglykolmono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, 2,2,4-Trimethyl-1,3-pentandiolmonoisobutyrat, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol, Cardanol, styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Davon bevorzugt sind Verdünner mit einem Siedepunkt von mehr als 200 °C, insbesondere Benzylalkohol, styrolisiertem Phenol, ethoxyliertes Phenol, phenolgruppenhaltige aromatische Kohlenwasserstoffharze wie insbesondere die Novares^{®}-Typen LS 500, LX 200, LA 300 oder LA 700 (von Rütgers), Diisopropylnaphthalin oder Cardanol, insbesondere Benzylalkohol.

Phenolgruppen-haltige Verdünner zeigen auch eine Wirkung als Beschleuniger.

Geeignete Stabilisatoren sind insbesondere Stabilisatoren gegen Oxidation, Wärme, Licht oder UV-Strahlung.

Geeignete oberflächenaktive Additive sind insbesondere Entschäumer, Entlüfter, Netzmittel, Dispergiermittel oder Verlaufsmittel.

Der Härter kann weitere Bestandteile enthalten, insbesondere:
- weitere Addukte, insbesondere Addukte von MPMD oder 1,2-Ethandiamin oder 1,2-Propandiamin mit Kresylglycidylether oder aromatischen Epoxidharzen, bei welchen nicht umgesetztes MPMD, 1,2-Ethandiamin oder 1,2-Propandiamin nach der Umsetzung destillativ entfernt wurde;
- Monoamine wie insbesondere Benzylamin oder Furfurylamin;
- Polyamidoamine, insbesondere Umsetzungsprodukte aus einer ein- oder mehrwertigen Carbonsäure oder deren Ester oder Anhydrid, insbesondere einer Dimerfettsäure, mit einem im stöchiometrischen Überschuss eingesetzten Polyamin, insbesondere DETA oder TETA;
- Mannich-Basen, insbesondere Phenalkamine, also Umsetzungsprodukte von Phenolen, insbesondere Cardanol, mit Aldehyden, insbesondere Formaldehyd, und Polyaminen;
- aromatische Polyamine wie insbesondere 4,4'-, 2,4' und/oder 2,2'-Diaminodiphenylmethan, 2,4(6)-Toluoldiamin, 3,5-Dimethylthio-2,4(6)-toluoldiamin oder 3,5-Diethyl-2,4(6)-toluylendiamin; oder
- Mercaptogruppen aufweisende Verbindungen, insbesondere flüssige Mercaptan-terminierte Polysulfidpolymere, Mercaptan-terminierte Polyoxyalkylenether, Mercaptan-terminierte Polyoxyalkylen-Derivate, Polyester von Thiocarbonsäuren, 2,4,6-Trimercapto-1,3,5-triazin, Triethylenglykoldimercaptan oder Ethandithiol.

Ein weiterer Gegenstand der Erfindung ist eine Epoxidharz-Zusammensetzung umfassend
- eine Harz-Komponente enthaltend mindestens ein Epoxidharz und
- eine Härter-Komponente enthaltend mindestens ein Amin der Formel (I) und/oder ein aminfunktionelles Addukt aus der Umsetzung des Amins der Formel (I) und mindestens einem Epoxidharz oder Monoepoxid.

Ein geeignetes Epoxidharz wird auf bekannte Art und Weise erhalten, insbesondere aus der Reaktion von Epichlorhydrin mit Polyolen, Polyphenolen oder Aminen.

Geeignete Epoxidharze sind insbesondere aromatische Epoxidharze, insbesondere die Glycidylether von:
- Bisphenol A, Bisphenol F oder Bisphenol A/F, wobei A für Aceton und F für Formaldehyd steht, welche als Edukte zur Herstellung dieser Bisphenole dienten. Im Fall von Bisphenol F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzcatechin;
- weiteren Bisphenolen oder Polyphenolen wie Bis(4-hydroxy-3-methylphenyl)-methan, 2,2-Bis(4-hydroxy-3-methylphenyl)propan (Bisphenol-C), Bis(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)-heptan, 2,4-Bis(4-hydroxyphenyl)-2-methylbutan, 2,4-Bis(3,5-dimethyl-4-hydroxyphenyl)-2-methylbutan, 1,1-Bis(4-hydroxyphenyl)cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]-benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Novolaken, welche insbesondere Kondensationsprodukte von Phenol oder Kresolen mit Formaldehyd bzw. Paraformaldehyd oder Acetaldehyd oder Crotonaldehyd oder Isobutyraldehyd oder 2-Ethylhexanal oder Benzaldehyd oder Furfural sind;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylen-bis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂- bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.

Bevorzugt ist das Epoxidharz ein Flüssigharz oder eine Mischung enthaltend zwei oder mehr Epoxid-Flüssigharze.

Als "Epoxid-Flüssigharz" wird ein technisches Polyepoxid mit einer Glasübergangstemperatur unterhalb von 25°C bezeichnet.

Gegebenenfalls enthält die Harz-Komponente zusätzlich Anteile von Epoxid-Festharz.

Das Epoxidharz ist insbesondere ein Flüssigharz auf der Basis eines Bisphenols oder Novolaks, insbesondere mit einem mittleren Epoxid-Equivalentgewicht im Bereich von 156 bis 210 g/eq.

Besonders geeignet ist ein Bisphenol-A Diglycidylether und/oder Bisphenol-F-Diglycidylether, wie sie kommerziell beispielsweise von Olin, Huntsman oder Momentive erhältlich sind. Diese Flüssigharze weisen eine für Epoxidharze niedrige Viskosität auf und ermöglichen eine schnelle Aushärtung und hohe Härten. Sie können Anteile von Bisphenol A-Festharz oder Novolak-Epoxidharzen enthalten.

Weiterhin besonders geeignet sind Phenol-Formaldehyd Novolak-Glycidylether, insbesondere mit einer mittleren Funktionalität im Bereich von 2.3 bis 4, bevorzugt 2.5 bis 3. Sie können Anteile von weiteren Epoxidharzen enthalten, insbesondere Bisphenol-A Diglycidylether oder Bisphenol-F-Diglycidylether.

Die Harz-Komponente kann einen Reaktivverdünner enthalten.

Als Reaktivverdünner bevorzugt sind Epoxidgruppen-haltige Reaktivverdünner, insbesondere Butandioldiglycidylether, Hexandioldiglycidylether, Trimethylolpropandi- oder triglycidylether, Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀- oder C₁₂- bis C₁₄- oder C₁₃- bis C₁₅-Alkylglycidylether.

Bevorzugt enthält die Epoxidharz-Zusammensetzung mindestens einen weiteren Bestandteil ausgewählt aus der Gruppe bestehend aus Verdünnern, Beschleunigern, Stabilisatoren, oberflächenaktiven Additiven, Füllstoffen und Pigmenten.

Als Verdünnern, Beschleuniger, Stabilisatoren und oberflächenaktive Additive geeignet sind insbesondere die bereits genannten.

Geeignete Füllstoffe sind insbesondere gemahlenes oder gefälltes Calciumcarbonat, welches gegebenenfalls mit Fettsäure, insbesondere Stearaten, beschichtet ist, Baryt (Schwerspat), Talk, Quarzmehl, Quarzsand, Siliciumcarbid, Eisenglimmer, Dolomit, Wollastonit, Kaolin, Mica (Kalium-Aluminium-Silikat), Molekularsiebe, Aluminiumoxid, Zinkoxid, Aluminium-dotiertes Zinkoxid, Aluminiumhydroxid, Magnesiumhydroxid, Kieselsäure, Zement, Gips, Flugasche, Russ, Graphit, Holzmehl, Metall-Pulver wie Aluminium, Kupfer, Eisen, Zink, Silber oder Stahl, PVC-Pulver oder Hohlkugeln. Davon bevorzugt sind Calciumcarbonat, Baryt, Quarzmehl, Talk, oder eine Kombination davon.

Geeignete Pigmente sind insbesondere Titandioxide, Eisenoxide, Chrom(III)oxide, Korrosionsschutzpigmente, organische Pigmente oder Russ, insbesondere Titandioxide.

Gegebenenfalls enthält die Epoxidharz-Zusammensetzung weitere Hilfs- und Zusatzstoffe, insbesondere die Folgenden:
- Reaktivverdünner, insbesondere die bereits vorgängig erwähnten, oder epoxidiertes Sojaöl oder Leinöl, Acetoacetatgruppen aufweisende Verbindungen, insbesondere acetoacetylierte Polyole, Butyrolakton, Carbonate, Aldehyde, Isocyanate oder Reaktivgruppen aufweisende Silikone;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere oder Sulfonamid-modifizierte Melamine;
- Fasern, insbesondere Glasfasern, Kohlefasern, Cellulosefasern, Metallfasern, Keramikfasern oder Kunststofffasern wie Polyamidfasern oder Polyethylenfasern;
- weitere Feststoffe, insbesondere Holzgranulat oder Zellstoff;
- Nanofüllstoffe, insbesondere Carbon Nanotubes;
- Rheologie-Modifizierer, insbesondere Verdicker oder Antiabsetzmittel;
- Haftverbesserer, insbesondere Organoalkoxysilane;
- flammhemmende Substanzen, insbesondere die bereits genannten Füllstoffe Aluminiumhydroxid oder Magnesiumhydroxid, Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat, Bisphenol-A-bis(diphenylphosphat), Tris(chloroethyl)phosphat, Tris(chloropropyl)-phosphat, Tris(dichloroisopropyl)phosphat, Tris[3-bromo-2,2-bis(bromomethyl)-propyl]phosphat, Tetrabromo-Bisphenol-A, Bis(2,3-dibromopropylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine; oder
- weitere Additive, insbesondere dispergiertes Paraffinwachs oder Biozide.

Bevorzugt enthält die Epoxidharz-Zusammensetzung nur einen geringen Gehalt an Verdünnern. Bevorzugt enthält sie weniger als 20 Gewichts-%, besonders bevorzugt weniger als 10 Gewichts-%, insbesondere weniger als 5 Gewichts-%, Verdünner, am meisten bevorzugt weniger als 1 Gewichts-% Verdünner, bezogen auf die gesamte Epoxidharz-Zusammensetzung.

Bevorzugt enthält die Epoxidharz-Zusammensetzung nur einen geringen Gehalt an Wasser, bevorzugt weniger als 5 Gewichts-%, insbesondere weniger als 1 Gewichts-%, Wasser, bezogen auf die gesamte Epoxidharz-Zusammensetzung.

Die Harz- und die Härter-Komponente der Epoxidharz-Zusammensetzung werden in voneinander getrennten Gebinden gelagert. Weitere Bestandteile der Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ebenfalls möglich ist, dass weitere Bestandteile als eigene, weitere Komponente vorhanden sind.

Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die Harz- und die Härter-Komponente werden kurz vor oder während der Applikation vermischt. Das Mischungsverhältnis wird bevorzugt so gewählt, dass das molare Verhältnis der gegenüber Epoxidgruppen reaktiven Gruppen zu den Epoxidgruppen im Bereich von 0.5 bis 1.5, insbesondere 0.7 bis 1.2, liegt. In Gewichtsteilen liegt das Mischungsverhältnis zwischen der Harz- und der Härter-Komponente typischerweise im Bereich von 1:2 bis 20:1.

Das Mischen der Komponenten erfolgt kontinuierlich oder batchweise mittels eines geeigneten Verfahrens, wobei darauf zu achten ist, dass zwischen dem Mischen der Komponenten und der Applikation nicht zu viel Zeit vergeht und die Applikation innerhalb der Topfzeit erfolgt. Das Mischen und die Applikation können bei Umgebungstemperatur erfolgen, welche typischerweise im Bereich von etwa 5 bis 40°C, bevorzugt bei etwa 10 bis 35°C, liegt. Das Mischen und/oder die Applikation erfolgen bevorzugt bei erhöhter Temperatur, insbesondere im Bereich von 40 bis 150 °C, bevorzugt 50 bis 120 °C.

Mit dem Mischen der Komponenten beginnt die Aushärtung der Epoxidharz-Zusammensetzung durch chemische Reaktion. Primäre und sekundäre Aminogruppen und gegebenenfalls vorhandene weitere gegenüber Epoxidgruppen reaktive Gruppen reagieren mit den Epoxidgruppen unter deren Ringöffnung. Als Ergebnis hauptsächlich dieser Reaktionen polymerisiert die Zusammensetzung und härtet dadurch aus.

Die Aushärtung erstreckt sich typischerweise über einige Stunden bis Tage. Die Dauer hängt unter anderem von der Temperatur, der Reaktivität der Bestandteile, deren Stöchiometrie und der Gegenwart bzw. Menge von Beschleunigern ab.

Im frisch vermischten Zustand hat die Epoxidharz-Zusammensetzung eine niedrige Viskosität. Bevorzugt liegt die Viskosität 5 Minuten nach dem Mischen der Harz- und der Härter-Komponente bei 20 °C im Bereich von 0.2 bis 20 Pa·s, bevorzugt 0.3 bis 10 Pa·s, insbesondere 0.3 bis 5 Pa·s, gemessen mittels Kegel-Platten Viskosimeter bei einer Schergeschwindigkeit von 10 s⁻¹.

Die Applikation der Epoxidharz-Zusammensetzung erfolgt auf mindestens ein Substrat und/oder in mindestens eine Giessform.

Als Substrat geeignet sind insbesondere:
- Glas, Glaskeramik, Beton, Mörtel, Zementestrich, Faserzement, Backstein, Ziegel, Gips oder Natursteine wie Granit oder Marmor;
- Reparatur- oder Nivelliermassen auf Basis PCC (Polymer-modifizierter Zementmörtel) oder ECC (Epoxidharz-modifizierter Zementmörtel);
- Metalle oder Legierungen wie Aluminium, Eisen, Stahl, Kupfer, weitere Buntmetalle, inklusive oberflächenveredelte Metalle oder Legierungen wie verzinkte oder verchromte Metalle;
- Asphalt oder Bitumen;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Isolierschäume, insbesondere aus EPS, XPS, PUR, PIR, Steinwolle, Glaswolle oder geschäumtem Glas (Foamglas);
- beschichtete oder lackierte Substrate, insbesondere lackierte Fliesen, gestrichener Beton, pulverbeschichtete Metalle oder Legierungen oder lackierte Bleche;
- Beschichtungen, Farben oder Lacke, insbesondere beschichtete Böden, welche mit einer weiteren Bodenbelagsschicht überschichtet werden.

Die Substrate können bei Bedarf vor dem Applizieren vorbehandelt werden, insbesondere durch physikalische und/oder chemische Reinigungsverfahren oder das Aufbringen eines Aktivators oder eines Primers.

Die Substrate werden insbesondere beschichtet und/oder verklebt.

Als Giessform geeignet ist eine Vorrichtung, in welche die vermischte, flüssige Epoxidharz-Zusammensetzung gegossen und darin ausgehärtet werden und nach der Aushärtung daraus entformt bzw. entnommen werden kann, wobei die ausgehärtete Zusammensetzung einen Formkörper bildet.

Die Giessform besteht bevorzugt zumindest auf der Oberfläche aus einem Material, von welchem die ausgehärtete Epoxidharz-Zusammensetzung ohne Beschädigung wieder gelöst werden kann, insbesondere aus Metall, Keramik, Kunststoff oder Silikon, welche gegebenenfalls mit einer Antihaft-Beschichtung versehen sind, insbesondere aus Teflon, Silikon oder einem Wachs.

Ein weiterer Gegenstand der Erfindung ist eine ausgehärtete Zusammensetzung erhalten aus der beschriebenen Epoxidharz-Zusammensetzung nach dem Vermischen der Harz- und der Härter-Komponente.

Die Epoxidharz-Zusammensetzung wird bevorzugt verwendet als Beschichtung, Primer, Klebstoff, Dichtstoff, Vergussmasse, Giessharz, Imprägnierharz, oder als Formkörper oder Matrix für Verbundwerkstoffe (Composites) wie insbesondere CFK (enthaltend Carbonfasern) oder GFK (enthaltend Glasfasern) oder Holzverbundwerkstoff.

Ein weiterer Gegenstand der Erfindung ist ein Verfahren zum Herstellen eines Formkörpers, umfassend die Schritte
(i) Vermischen der Komponenten der Epoxidharz-Zusammensetzung,
(ii) Hineingeben der vermischten Zusammensetzung in eine Giessform,
gefolgt von der Aushärtung der vermischten Zusammensetzung, gegebenenfalls unter Druck und gegebenenfalls mittels zugeführter Wärme.

Dabei kann die Epoxidharz-Zusammensetzung vor der Aushärtung mit Fasern, Pulvern oder Granulaten versetzt werden, insbesondere mit Carbonfasern, Glasfasern oder Holzpulver und/oder -granulat, um ein Composit-Material zu erhalten.

Der Formkörper kann in der Giessform in einem Guss hergestellt werden, oder er kann in Schichten aufgebaut werden, zum Beispiel um einen transparenten Formkörper herzustellen, welche beispielsweise als Tischplatte verwendbar ist. Dabei kann zwischen den Schichten ein beliebiges weiteres Material eingegossen werden, beispielsweise dekorative Objekte wie Perlen, Holzstücke oder Muscheln.

Nach der Aushärtung wird der Formkörper bevorzugt aus der Giessform entfernt. Er kann weiterverarbeitet werden, insbesondere durch Schneiden, Bohren, Ziehen, Schleifen oder Polieren.

Bei der Herstellung von Formkörpern sind eine geringe Exothermie bei der Aushärtung und eine hohe Glasübergangstemperatur des ausgehärteten Materials besonders vorteilhaft.

Ein weiterer Gegenstand der Erfindung ist ein Artikel enthaltend die ausgehärtete Zusammensetzung aus der beschriebenen Epoxidharz-Zusammensetzung.

Der Artikel ist insbesondere ein Formkörper, insbesondere ein Composit-Material, insbesondere eine Lamelle, ein Paneel oder ein Bauteil eines industriellen Guts. Der Artikel ist weiterhin insbesondere eine Bodenbeschichtung, Wandbeschichtung, Bauteilbeschichtung, Rohrbeschichtung, Dachbeschichtung oder eine Korrosionsschutzbeschichtung.

Der Artikel ist weiterhin insbesondere ein mit der Epoxidharz-Zusammensetzung verklebter Artikel.

Bevorzugt ist der Artikel ein Formkörper.

Bevorzugt ist der Formkörper ein Composit-Material.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

### Beschreibung der Messmethoden:

Die **Viskosität** wurde auf einem thermostatisierten Kegel-Platten-Viskosimeter Rheotec RC30 (Kegeldurchmesser 50 mm, Kegelwinkel 1°, Kegelspitze-PlattenAbstand 0.05 mm) gemessen. Niedrigviskose Proben mit einer Viskosität von weniger als 100 mPa·s wurden mit einer Scherrate von 100 s⁻¹ gemessen, höherviskose Proben mit einer Scherrate von 10 s⁻¹.

Die **Aminzahl** wurde durch Titration bestimmt (mit 0.1N HClO₄ in Essigsäure gegen Kristallviolett).

**Gaschromatogramme** (GC) wurden gemessen im Temperaturbereich von 60 bis 320 °C mit einer Aufheizrate von 15 °C/min und 10 min Verweilzeit bei 320 °C. Die Injektortemperatur betrug 250 °C. Es wurde eine Zebron ZB-5 Säule verwendet (L = 30 m, ID = 0.25 mm, dj = 0.5 µm) bei einem Gasfluss von 1.5 ml/Min. Die Detektion erfolgte mittels Flammenionisation (FID).

**Infrarotspektren** (FT-IR) wurden als unverdünnte Filme auf einem mit horizontaler ATR-Messeinheit mit Diamant-Kristall ausgestatteten FT-IR Gerät Nicolet iS5 von Thermo Scientific gemessen. Die Absorptionsbanden sind in Wellenzahlen (cm⁻¹) angegeben.

**¹H-NMR-Spektren** wurden auf einem Spektrometer des Typs Bruker Ascend 400 bei 400.14 MHz gemessen; die chemischen Verschiebungen δ sind angegeben in ppm relativ zu Tetramethylsilan (TMS). Echte und Pseudo-Kopplungsmuster wurden nicht unterschieden.

### Herstellung von Aminen der Formel (I):

### Amin A1: 1,4-Bis(α-aminoethyl)benzol

50.0 g (0.31 mol) 1,4-Diacetylbenzol wurden bei 40 °C unter Stickstoffatmosphäre in 800 ml Ethanol gelöst, mit 44.8 g einer Hydroxylamin-Lösung (50 Gewichts-% in Wasser, 0.68 mol) und einer Lösung aus 52.2 g Kaliumcarbonat in 250 ml Wasser versetzt, wobei eine Gelbfärbung auftrat. Anschliessend wurde die Rekationsmischung 6 Stunden am Rückfluss gekocht und dann über Nacht bei Raumtemperatur stehen lassen, wobei sich ein weisser Niederschlag bildete. Der Niederschlag wurde anschliessend mittels Filtration gesammelt, mit Wasser gewaschen und während 1 Stunde im Vakuum getrocknet. Anschliessend wurde das erhaltene weisse Pulver in 800 ml einer Mischung aus Isopropylalkohol und 1,4-Dioxan (1:1 in Gewicht) gelöst und anschliessend bei 90°C, 90 bar Wasserstoff-Druck und einem Fluss von 5 ml/min auf einer kontinuierlich arbeitenden Hydrierapparatur mit Raney-Nickel Festbettkatalysator hydriert und die hydrierte Lösung am Rotationsverdampfer eingeengt. Erhalten wurden 49.0 g eines gelblichen Öls, welches anschliessend mittels Destillation gereinigt wurde. Bei 68 bis 75 °C (Dampftemperatur) und 0.04 mbar wurden 34.4 g Destillat als klares, farbloses Öl mit einer Viskosität bei 20 °C von 15 mPa·s, einer Aminzahl von 680 mg KOH/g, einem mittels GC bestimmten Gehalt an 1,4-Bis(α-aminoethyl)benzol von ca. 96 % (Retentionszeit 9.7 min) und einem berechneten AHEW von 41.0 g/eq erhalten.

¹H-NMR (CDCl₃): 7.31 (d, 4 H, Ar-H), 4.1 (q, 2 H, Ar-CH-N), 1.51 (br s, 4 H, NH₂), 1.39 (d, 6 H, CH₃).

FT-IR: 3359, 3279, 2957, 2920, 2856, 1594, 1508, 1448, 1367, 1328, 1188, 1097, 1015, 829, 699.

### Amin A2: 1,3-Bis(α-aminoethyl)benzol

Das Amin **A2** wurde wie für Amin **A1** beschrieben hergestellt, wobei anstelle von 1,4-Diacetylbenzol in gleicher Menge 1,3-Diacetylbenzol eingesetzt wurde. Erhalten wurden 47.0 g eines gelblichen Öls, welches anschliessend mittels Destillation gereinigt wurde. Bei 55 bis 60 °C (Dampftemperatur) und 0.06 mbar wurden 29.9 g Destillat als klares, farbloses Öl mit einer Viskosität bei 20 °C von 25 mPa·s, einer Aminzahl von 661 mg KOH/g, und mittels GC bestimmten Gehalt an 1,3-Bis(α-aminoethyl)benzol von ca. 95 % (Retentionszeit 9.5 min) und einem berechneten AHEW von 41.0 g/eq erhalten.

¹H-NMR (CDCl₃): 7.32 (t, 1 H, Ar-H), 7.27 (d, 2 H, Ar-H), 7.21 (s, 1 H, Ar-H), 4.1 (q, 2 H, Ar-CH-N), 1.51 (br s, 4 H, NH₂), 1.38 (d, 6 H, CH₃).

FT-IR: 3360, 3279, 2959, 2922, 2864, 1604, 1485, 1446, 1366, 1326, 1152, 1111, 1054, 857, 795, 706.

### Amin A3: 1-α-Aminoethyl-4-aminomethylbenzol

50.0 g (0.34 mol) 4-Acetylbenzonitril wurden unter Stickstoffatmosphäre bei 40 °C in 800 ml Ethanol gelöst und mit 2.4 g wässriger Perchlorsäure (70 Gewichts-% HClO₄ in Wasser) versetzt. Dann wurde die Reaktionsmischung langsam unter gutem Rühren mit 45.0 g (0.52 mol) Methylethylketoxim versetzt, während 16 h am Rückfluss gekocht und anschliessend die flüchtigen Bestandteile (Ethanol, Methylethylketon und überschüssiges Methylethylketoxim) am Rotationsverdampfer entfernt. Das erhaltene Pulver wurde mit Wasser gewaschen, während 1 Stunde im Vakuum getrocknet und dann in 800 ml einer Mischung aus Isopropylalkohol und 1,4-Dioxan (1:1 in Gewicht) gelöst, bei 80°C, 90 bar Wasserstoff-Druck und einem Fluss von 5 ml/min auf einer kontinuierlich arbeitenden Hydrierapparatur mit Raney-Nickel-Festbettkatalysator hydriert und die hydrierte Lösung schliesslich am Rotationsverdampfer eingeengt. Erhalten wurden 49.0 g eines gelblichen Öls, welches anschliessend mittels Destillation gereinigt wurde. Bei 75 bis 80 °C (Dampftemperatur) und 0.06 mbar wurden 23.7 g Destillat als klares, farbloses Öl mit einer Viskosität bei 20 °C von 56 mPa·s, einer Aminzahl von 710 mg KOH/g und einem mittels GC bestimmten Gehalt an 1-α-Aminoethyl-4-amino-methylbenzol von ca. 83 % (Retentionszeit 9.5 min) und ca. 11.5 % eines Nebenprodukts (Retentionszeit 11.5 min, vermutlich N-(1-(4-(Aminomethyl)phenyl)ethyl)-butan-2-amin). Für die weitere Verwendung wurde mit einem AHEW von 37.6 g/eq gearbeitet.

¹H-NMR (CDCl₃): 7.27 (d, 4 H, Ar-H), 4.06 (q, 1 H, Ar-CH-N), 3.80 (s, 2 H, Ar-CH₂-N), 2.90 (br s, 4 H, NH₂), 1.36 (d, 3 H, CH₃).

FT-IR: 3359, 3280, 2959, 2921, 2823, 1606, 1509, 1448, 1417, 1366, 1278, 1202, 1097, 1016, 832, 698.

### Amin A4: 1-α-Aminoethyl-3-aminomethylbenzol

Das Amin **A4** wurde wie für Amin **A3** beschrieben hergestellt, wobei anstelle von 4-Acetylbenzonitril in gleicher Menge 3-Acetylbenzonitril eingesetzt wurde. Erhalten wurden 48.0 g eines gelblichen Öls, welches anschliessend mittels Destillation gereinigt wurde. Bei 60 bis 65 °C und 0.06 mbar wurden 19.6 g Destillat als klares, farbloses Öl mit einer Viskosität bei 20 °C von 73 mPa·s, einer Aminzahl von 712 mg KOH/g, einem mittels GC bestimmten Gehalt an 1-α-Aminoethyl-3-aminome-thylbenzol von ca. 85 % (Retentionszeit 9.4 min) und ca. 12 % eines Nebenprodukts (Retentionszeit 11.3 min, vermutlich N-(1-(3-(Aminomethyl)phenyl)ethyl)-butan-2-amin). Für die weitere Verwendung wurde mit einem AHEW von 37.6 g/eq gearbeitet.

¹H-NMR (CDCl₃): 7.27 (t, 1 H, Ar-H), 7.26 (m, 3 H, Ar-H), 4.06 (q, 1 H, Ar-CH-N), 3.78 (s, 2 H, Ar-CH₂-N), 2.93 (br s, 4 H, NH₂), 1.34 (d, 3 H, CH₃).

FT-IR: 3360, 3280, 2960, 2921, 2863, 1605, 1589, 1485, 1444, 1368, 1327, 1286, 1155, 1109, 1049, 999, 828, 788, 704.

### Herstellung von aminfunktionellen Addukten:

### Addukt-1:

Eine Mischung aus 24.64 g **Amin A1** (0.15 mol) und 18.57 g Benzylalkohol wurde auf 80 °C erwärmt. Dazu wurden unter gutem Rühren langsam 18.70 g Araldite^{®} GY 250 (0.1 mol EP-Gruppen) eingerührt, wobei die Temperatur der Reaktionsmischung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 44.2 Pa·s, einer Aminzahl von 260 mg KOH/g und einem berechneten AHEW von 123.8 g/eq erhalten.

### Addukt-2:

Eine Mischung aus 22.53 g **Amin A3** (0.15 mol) und 17.67 g Benzylalkohol wurde auf 80 °C erwärmt. Dazu wurden unter gutem Rühren langsam 18.70 g Araldite^{®} GY 250 (0.1 mol EP-Gruppen) zugegeben, wobei die Temperatur der Reaktionsmischung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 22.8 Pa·s, einer Aminzahl von 268 mg KOH/g und einem berechneten AHEW von 117.8 g/eq erhalten.

### Addukt-3:

Eine Mischung aus 22.53 g **Amin A4** (0.15 mol) und 17.67 g Benzylalkohol wurde auf 80 °C erwärmt. Dazu wurden unter gutem Rühren langsam 18.70 g Araldite^{®} GY 250 (0.1 mol EP-Gruppen) zugegeben, wobei die Temperatur der Reaktionsmischung zwischen 70 und 90 °C gehalten wurde. Die Reaktionsmischung wurde während einer Stunde in diesem Temperaturbereich belassen und anschliessend abgekühlt. Es wurde eine klare, leicht gelbliche Flüssigkeit mit einer Viskosität bei 20 °C von 31.5 Pa·s, einer Aminzahl von 255 mg KOH/g und einem berechneten AHEW von 117.8 g/eq erhalten.

### Verwendete weitere Substanzen und Abkürzungen:

- Araldite^{®} GY 250:: Bisphenol A-Diglycidylether, EEW 187 g/Eq (von Huntsman)
- Araldite^{®} DY-E:: Monoglycidylether von C₁₂- bis C₁₄-Alkoholen, EEW ca. 290 g/Eq (von Huntsman)
- MXDA:: 1,3-Bis(aminomethyl)benzol, AHEW 34 g/Eq (von Mitsubishi Gas Chemical)
- IPDA:: 1-Amino-3-aminomethyl-3,5,5-trimethylcyclohexan, AHEW 42.6 g/Eq (Vestamin^{®} IPD, von Evonik)
- 1,3-BAC: 1,3-Bis(aminomethyl)cyclohexan, AHEW 35.5 g/Eq (von Mitsubishi Gas Chemical)
- B-EDA: N-Benzyl-1,2-ethandiamin, hergestellt wie nachfolgend beschrieben, 150.2 g/mol, AHEW 50.1 g/eq
- Ancamine^{®} K54: 2,4,6-Tris(dimethylaminomethyl)phenol (von Evonik)

### N-Benzyl-1,2-ethandiamin (B-EDA):

180.3 g (3 mol) 1,2-Ethandiamin wurden bei Raumtemperatur vorgelegt, mit einer Lösung aus 106.0 g (1 mol) Benzaldehyd in 1200 ml Isopropanol vermischt und 2 Stunden gerührt, anschliessend bei 80°C, 80 bar Wasserstoff-Druck und einem Fluss von 5 ml/min auf einer kontinuierlich arbeitenden Hydrierapparatur mit Pd/C-Festbettkatalysator hydriert und die hydrierte Lösung am Rotationsverdampfer bei 65°C eingeengt, wobei unreagiertes 1,2-Ethandiamin, Wasser und Isopropanol entfernt wurden. Die so erhaltene Reaktionsmischung wurde bei 80°C unter Vakuum mittels Destillation gereinigt. Erhalten wurde eine farblose Flüssigkeit mit einem mittels GC bestimmten Gehalt an N-Benzyl-1,2-ethandiamin von > 97%.

### Herstellung von Härtern und Epoxidharz-Zusammensetzungen:

### Beispiele 1 bis 8:

Für jedes Beispiel wurden die in Tabelle 1 angegebene Harz- und Härter-Komponente separat auf eine Temperatur von 60 °C aufgewärmt. Mit diesen vorgewärmten Komponenten wurde dann eine Portion von insgesamt 20 g Epoxidharz-Zusammensetzung hergestellt, indem die Komponenten im in Tabelle 1 angegebenen Gewichtsverhältnis mittels eines Zentrifugalmischers (SpeedMixer^{™} DAC 150, FlackTek Inc.) während 15 Sekunden vermischt und dann unverzüglich folgendermassen geprüft wurden:
Die vermischte Zusammensetzung wurde in ein mittels Wasserbad auf 60 °C thermostatisiertes Reagenzglas gegeben und ein Thermofühler in der Mitte des vermischten Materials platziert. Damit wurde die Zeit bis zum Erreichen der maximalen Temperatur (in der Tabelle angegeben als **time to peak exotherm)** und die Höhe der maximalen Temperatur **(peak exotherm temperature)** im vermischten Material bestimmt. Die in der Tabelle angegebenen Werte sind Mittelwerte aus drei Messungen.

Der **Tg**-Wert (Glasübergangstemperatur) wurde mittels DSC an ausgehärteten Proben aus der Mitte des Reagenzglases von der oben beschriebenen Bestimmung gemessen, wobei diese Proben vor der Messung zusätzlich während 14 Tagen im Normklima gelagert waren. Die Messung erfolgte mit einem Mettler Toledo DSC 3+ 700 Gerät und dem Messprogramm (1) -10 °C während 2 min, (2) - 10 bis 200 °C mit einer Aufheizrate von 10 K/min (= 1st run), (3) 200 bis -10 °C mit einer Kühlrate von -50 K/min, (4) -10 °C während 2 min, (5) -10 bis 180 °C mit einer Aufheizrate von 10 K/min (= 2nd run).

**Tabelle 1: Zusammensetzung (in Gewichtsteilen) und Eigenschaften der Beispiele 1 bis 8.**

| **Beispiel** | **1** | **2** | **3** | **4** | **5 (Ref.)** | **6 (Ref.)** | **7 (Ref.)** | **8 (Ref.)** |
|---|---|---|---|---|---|---|---|---|
| **Harz-Komp.:** | | | | | | | | |
| Araldite^{®} GY 250 | 187.0 | 187.0 | 187.0 | 187.0 | 187.0 | 187.0 | 187.0 | 187.0 |

| **Härter-Komp.:** | | | | | | | | |
|---|---|---|---|---|---|---|---|---|
| **Amin A1** | 41.0 | - | - | - | - | - | - | - |
| **Amin A2** | - | 41.0 | - | - | - | - | - | - |
| **Amin A3** | - | - | 37.6 | - | - | - | - | - |
| **Amin A4** | - | - | - | 37.6 | - | - | - | - |
| MXDA | - | - | - | - | 34.0 | - | - | - |
| IPDA | - | - | - | - | - | 42.6 | - | - |
| 1,3-BAC | - | - | - | - | - | - | 35.5 | - |
| B-EDA | - | - | - | - | - | - | - | 50.1 |
| time to peak exotherm [min] | 21 | 20 | 23 | 20 | 12 | 21 | 8 | 12 |
| peak exotherm temperature | 66°C | 65°C | 75°C | 74°C | 150°C | 74°C | 213°C | 201°C |
| Tg 1st / 2nd run [°C] | 52 / 141 | 65 / 128 | 72 / 120 | 68 / 100 | 93 / 100 | 76 / 155 | 133/ 140 | 53 / 88 |

### Beispiele 9 bis 24:

Für jedes Beispiel wurden die in den Tabellen 2 bis 4 angegebenen Inhaltsstoffe der Harz-Komponente in den angegebenen Mengen (in Gewichtsteilen) mittels eines Zentrifugalmischers (SpeedMixer^{™} DAC 150, FlackTek Inc.) vermischt und unter Ausschluss von Feuchtigkeit aufbewahrt.

Ebenso wurden die in den Tabellen 2 bis 4 angegebenen Inhaltsstoffe der Härter-Komponente verarbeitet und aufbewahrt.

Anschliessend wurden die beiden Komponenten jeder Zusammensetzung mittels des Zentrifugalmischers zu einer homogenen Flüssigkeit verarbeitet und diese unverzüglich folgendermassen geprüft:
Die **Viskosität** wurde 5 min nach dem Vermischen der Harz- und der Härter-Komponente wie beschrieben bei einer Temperatur von 20 °C gemessen.
Die **Gelierzeit** wurde bestimmt, indem eine frisch vermischte Menge von ca. 3 g im Normklima mit einem Spatel in regelmässigen Abständen bewegt wurde, bis die Masse gelierte.
Die **Shore D** Härte wurde bestimmt nach DIN 53505 an zylindrischen Prüfkörpern (Durchmesser 20 mm, Dicke 5 mm), welche im Normklima gelagert und die Härte 1 Tag (24h) und 2 Tage nach der Herstellung gemessen wurde.

Weiterhin wurde ein Film in einer Schichtdicke von 500 µm auf eine Glasplatte aufgezogen und dieser im Normklima gelagert bzw. ausgehärtet. An diesem Film wurde die **Königshärte** (Pendelhärte nach König nach DIN EN ISO 1522) nach 1 Tag, 2 Tagen, 7 Tagen und nach 14 Tagen bestimmt. Nach 14 Tagen wurde der **Aspekt** des Films beurteilt. Als "schön" wurde ein Film bezeichnet, welcher eine glänzende und nichtklebrige Oberfläche ohne Struktur aufwies. Als "Struktur" wird dabei jegliche Art von Zeichnung oder Muster auf der Oberfläche bezeichnet. Als "matt" wurde ein Film mit reduziertem Glanz bezeichnet.

Als Mass für die Vergilbung wurde von einigen Beispielen die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet **(Q-Sun (72h)**). Anschliessend wurde der Farbunterschied ΔE des so belasteten Films im Vergleich zum entsprechenden nicht belasteten Film mittels eines Colorimeters NH310 von Shenzen 3NH Technology Co. LTD, ausgerüstet mit Silicon Photoelectric Diode Detector, Light Source A, Color Space Measurement Interface CIE L*a*b*C*H*, bestimmt.

Der **Tg**-Wert (Glasübergangstemperatur) wurde an während 14 Tagen im Normklima ausgehärteten Proben (aus dem Prüfkörper für die Shore D Härte) wie für das Beispiel 1 beschrieben gemessen.

**Tabelle 2: Zusammensetzung und Eigenschaften der Beispiele 9 bis 14. ¹ nicht messbar (zu spröd)**

| **Beispiel** | | **9** | **10** | **11** | **12** | **13 (Ref.)** | **14 (Ref.)** |
|---|---|---|---|---|---|---|---|
| **Harz-Komponente:** | | | | | | | |
| Araldite^{®} GY 250 | | 167.2 | 167.2 | 167.2 | 167.2 | 167.2 | 167.2 |
| Araldite^{®} DY-E | | 31.8 | 31.8 | 31.8 | 31.8 | 31.8 | 31.8 |

| **Härter-Komponente:** | | | | | | | |
|---|---|---|---|---|---|---|---|
| **Amin A1** | | 41.0 | - | - | - | - | - |
| **Amin A2** | | - | 41.0 | - | - | - | - |
| **Amin A3** | | - | - | 37.6 | - | - | - |
| **Amin A4** | | - | - | - | 37.6 | - | - |
| MXDA | | - | - | - | - | 34.0 | - |
| IPDA | | - | - | - | - | - | 42.6 |
| Viskosität (10') [Pa·s] | | 0.41 | 0.43 | 0.37 | 0.41 | 0.38 | 0.60 |
| Gelierzeit (h:min) | | > 8:00 | > 8:00 | > 4:30 | 4:20 | 4:10 | 3:00 |
| Shore D | (1d NK) | 36 | 40 | 75 | 75 | 82 | n.m.¹ |
| | (2d NK) | 63 | 62 | 77 | 79 | 82 | n.m.¹ |
| Königshärte [s] | (1d NK) | 18 | 13 | 21 | 18 | 21 | 87 |
| | (2d NK) | 118 | 64 | 56 | 53 | 29 | 155 |
| | (7d NK) | 168 | 164 | 101 | 109 | 32 | 196 |
| | (14d NK) | 178 | 174 | 105 | 133 | 42 | 205 |
| Aspekt | | schön, uneben | leicht Struktur | schön | matt | Struktur | matt |
| Q-Sun (72h) ΔE | | 1.5 | 4.8 | 6.2 | 8.8 | 10.4 | 1.4 |
| Tg 1st / 2nd run [°C] | | 69 / 106 | 65/90 | 53 / 88 | 50 / 80 | 54/77 | 57 / 104 |

**Tabelle 3: Zusammensetzung und Eigenschaften der Beispiele 15 bis 21.**

| **Beispiel** | | **15** | **16** | **17** | **18** | **19 (Ref.)** | **20 (Ref.)** | **21 (Ref.)** |
|---|---|---|---|---|---|---|---|---|
| **Harz-Komponente:** | | | | | | | | |
| Araldite^{®} GY 250 | | 167.2 | 167.2 | 167.2 | 167.2 | 167.2 | 167.2 | 167.2 |
| Araldite^{®} DY-E | | 31.8 | 31.8 | 31.8 | 31.8 | 31.8 | 31.8 | 31.8 |

| **Härter-Komponente:** | | | | | | | | |
|---|---|---|---|---|---|---|---|---|
| **Amin A1** | | 20.5 | - | - | - | - | - | - |
| **Amin A2** | | - | 20.5 | - | - | - | - | - |
| **Amin A3** | | - | - | 18.8 | - | - | - | - |
| **Amin A4** | | - | - | - | 18.8 | - | - | - |
| MXDA | | - | - | - | - | 17.0 | 34.0 | - |
| IPDA | | 21.3 | 21.3 | 21.3 | 21.3 | 21.3 | - | 42.6 |
| Benzylalkohol | | 25.0 | 25.0 | 25.0 | 25.0 | 25.0 | 25.0 | 25.0 |
| Salicylsäure | | 2.0 | 2.0 | 2.0 | 2.0 | 2.0 | 2.0 | 2.0 |
| Ancamine^{®} K54 | | 2.0 | 2.0 | 2.0 | 2.0 | 2.0 | 2.0 | 2.0 |
| Viskosität (10') [Pa·s] | | 0.62 | 0.61 | 0.58 | 0.58 | 0.39 | 0.37 | 0.62 |
| Gelierzeit (h:min) | | 4:15 | 4:35 | 4:15 | 4:15 | 2:40 | 3:00 | 3:00 |
| Shore D | (1d NK) | 66 | 52 | 71 | 62 | 77 | 78 | 77 |
| | (2d NK) | 78 | 72 | 78 | 75 | 78 | 79 | 79 |
| Königshärte [s] | (1d NK) | 42 | 18 | 52 | 39 | 59 | 36 | 91 |
| | (2d NK) | 118 | 85 | 111 | 95 | 106 | 42 | 143 |
| | (7d NK) | 160 | 143 | 158 | 155 | 145 | 60 | 155 |
| | (14d NK) | 164 | 158 | 161 | 157 | 150 | 74 | 158 |
| Aspekt | | schön | schön | schön | schön | schön | Struktur | schön |
| Tg 1st / 2nd run [°C] | | 47 / 97 | 47 / 92 | 46/88 | 48 / 84 | 44 / 59 | 46 / 76 | 57 / 99 |

**Tabelle 4: Zusammensetzung und Eigenschaften der Beispiele 22 bis 24.**

| **Beispiel** | | **22** | **23** | **24** |
|---|---|---|---|---|
| **Harz-Komponente:** | | | | |
| Araldite^{®} GY 250 | | 167.2 | 167.2 | 167.2 |
| Araldite^{®} DY-E | | 31.8 | 31.8 | 31.8 |

| **Härter-Komponente:** | | | | |
|---|---|---|---|---|
| **Addukt-1** | | 24.8 | - | - |
| **Addukt-2** | | - | 23.6 | - |
| **Addukt-3** | | - | - | 23.6 |
| B-EDA | | 20.0 | 20.0 | 20.0 |
| IPDA | | 17.0 | 17.0 | 17.0 |
| Benzylalkohol | | 17.6 | 17.9 | 17.9 |
| Ancamine^{®} K54 | | 2.0 | 2.0 | 2.0 |
| Viskosität (10') [Pa·s] | | 0.56 | 0.55 | 0.58 |
| Gelierzeit (h:min) | | > 3:30 | > 3:30 | > 3:30 |
| Shore D | (1d NK) | 62 | 62 | 65 |
| | (2d NK) | 77 | 76 | 77 |
| Königshärte [s] | (1d NK) | 36 | 32 | 38 |
| | (2d NK) | 84 | 70 | 71 |
| | (7d NK) | 153 | 145 | 144 |
| | (14d NK) | 164 | 168 | 167 |
| Aspekt | | schön | schön | schön |
| Tg 1st / 2nd run [°C] | | 50/79 | 51 / 79 | 49 / 77 |

## Patentansprüche

1. Verwendung eines Amins der Formel (I) zum Aushärten von Epoxidharzen, 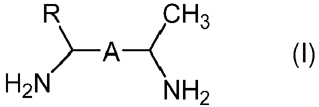 wobei
R für H oder Methyl steht, und
A für einen Phenylen- oder Cyclohexylen-Rest steht.

2. Verwendung gemäss Anspruch 1, **dadurch gekennzeichnet, dass** A ausgewählt ist aus der Gruppe bestehend aus 1,3-Phenylen, 1,4-Phenylen, 1,3-Cyclohexylen und 1,4-Cyclohexylen.

3. Verwendung gemäss einem der Ansprüche 1 bis 2, **dadurch gekennzeichnet, dass** das Amin der Formel (I) ausgewählt ist aus der Gruppe bestehend aus 1,4-Bis(α-aminoethyl)benzol, 1,3-Bis(α-aminoethyl)benzol, 1-α-Aminoethyl-4-aminomethyl-benzol und 1-α-Aminoethyl-3-aminomethyl-benzol.

4. Verwendung gemäss einem der Ansprüche 1 bis 3, **dadurch gekennzeichnet, dass** das Amin der Formel (I) 1,4-Bis(α-aminoethyl)benzol oder 1,3-Bis(α-aminoethyl)benzol ist.

5. Verwendung gemäss einem der Ansprüche 1 bis 4, **dadurch gekennzeichnet, dass** das Amin der Formel (I) Bestandteil eines Reaktionsprodukts erhalten aus der Umsetzung von
- mindestens einem Keton der Formel (II) mit
- Ammoniak oder Hydroxylamin oder einem Oxim der Formel (III)
und nachfolgender Hydrierung ist, 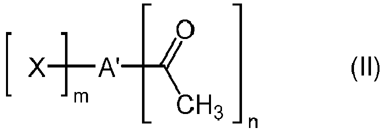 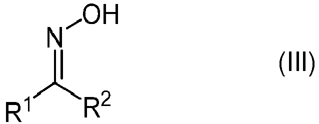 wobei
m für 0 oder 1, n für 1 oder 2 und (m+n) für 2 stehen,
X für Formyl oder Nitril steht,
A' für einen Phenylen- oder Cyclohexylen-Rest steht,
R¹ für H oder Methyl steht, und
R² für H oder einen Alkylrest mit 1 bis 4 C-Atomen steht.

6. Aminfunktionelles Addukt aus der Umsetzung des Amins der Formel (I) wie in einem der Ansprüche 1 bis 5 beschrieben mit mindestens einem Epoxidharz oder Monoepoxid.

7. Härter für Epoxidharze enthaltend mindestens ein Amin der Formel (I) wie in einem der Ansprüche 1 bis 5 beschrieben und/oder mindestens ein Addukt gemäss Anspruch 6, und mindestens einen weiteren Bestandteil ausgewählt aus weiteren Aminen **A1,** Beschleunigern, Verdünnern, Stabilisatoren und oberflächenaktiven Additiven.

8. Epoxidharz-Zusammensetzung umfassend
- eine Harz-Komponente enthaltend mindestens ein Epoxidharz und
- eine Härter-Komponente enthaltend mindestens ein Amin der Formel (I) wie in einem der Ansprüche 1 bis 5 beschrieben und/oder ein aminfunktionelles Addukt gemäss Anspruch 6 oder einen Härter gemäss Anspruch 7.

9. Ausgehärtete Zusammensetzung erhalten aus der Epoxidharz-Zusammensetzung gemäss Anspruch 8 nach dem Vermischen der Harz- und der Härter-Komponente.

10. Verfahren zum Herstellen eines Formkörpers, umfassend die Schritte
(i) Vermischen der Komponenten der Epoxidharz-Zusammensetzung gemäss Anspruch 8,
(ii) Hineingeben der vermischten Zusammensetzung in eine Giessform, gefolgt von der Aushärtung der vermischten Zusammensetzung, gegebenenfalls unter Druck und gegebenenfalls mittels zugeführter Wärme.

11. Artikel enthaltend die ausgehärtete Zusammensetzung gemäss Anspruch 9.

12. Artikel gemäss Anspruch 11, **dadurch gekennzeichnet, dass** dieser ein Formkörper ist.

13. Artikel gemäss Anspruch 12, **dadurch gekennzeichnet, dass** der Formkörper ein Composit-Material ist.

14. Reaktionsprodukt enthaltend mindestens ein Amin der Formel (I), erhalten aus der Umsetzung von
- mindestens einem Keton der Formel (II) mit
- Ammoniak oder Hydroxylamin oder einem Oxim der Formel (III)
und nachfolgender Hydrierung, 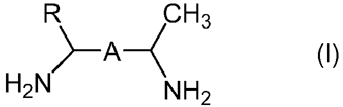 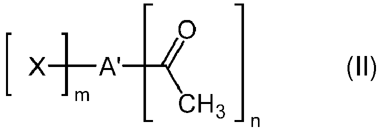 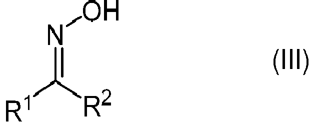 wobei
R für H oder Methyl steht,
A für einen Phenylen- oder Cyclohexylen-Rest steht,
m für 0 oder 1, n für 1 oder 2 und (m+n) für 2 stehen,
X für Formyl oder Nitril steht,
A' für einen Phenylen- oder Cyclohexylen-Rest steht,
R¹ für H oder Methyl steht, und
R² für H oder einen Alkylrest mit 1 bis 4 C-Atomen steht.

15. Reaktionsprodukt gemäss Anspruch 14, **dadurch gekennzeichnet, dass** das Keton der Formel (II) 1,3-Diacetylbenzol oder 1,4-Diacetylbenzol ist.
